# EUROPÄISCHE PATENTSCHRIFT

(11) **EP 2 118 521 B1**
(45) Veröffentlichungstag und Bekanntmachung des Hinweises auf die Patenterteilung: **13.02.2013**
(21) Anmeldenummer: 08717027.0
(22) Anmeldetag: 22.02.2008
(51) Int. Cl.: F16H 37/04

(54) **AUTOMATISIERTES GRUPPENGETRIEBE**
AUTOMATIC GROUP TRANSMISSION
BOÎTE DE VITESSES À CHANGEMENT DE GAMME DE VITESSES AUTOMATIQUE

(30) Priorität: 06.03.2007 DE 102007010828
(43) Veröffentlichungstag der Anmeldung: 18.11.2009
(73) Patentinhaber: ZF Friedrichshafen AG, 88038 Friedrichshafen (DE)
(72) Erfinder: BADER, Josef, 88045 Friedrichshafen (DE); DOEBELE, Bernd, 88682 Salem (DE); MILLER, Martin, 88090 Immenstaad (DE)
(86) Internationale Anmeldenummer: PCT/EP2008/052163
(87) Internationale Veröffentlichungsnummer: WO 2008/107317

(56) Entgegenhaltungen:
- DE-A1- 10 143 994
- DE-A1- 19 831 293

## Beschreibung

Die Erfindung betrifft ein automatisiertes Gruppengetriebe gemäß den Merkmalen des Oberbegriffs des Patentanspruchs 1, wie bekannt aus DE 198 31 293.

Gruppengetriebe mit einem mehrgängigen Hauptgetriebe und einer diesem antriebstechnisch vorgeschalteten Vorschaltgruppe sowie einer diesem antriebstechnisch nachgeschalteten Bereichsgruppe sind seit längerem bekannt und kommen bevorzugt in Nutzfahrzeugen zum Einsatz. Durch eine zumeist zweistufig ausgeführte Vorschaltgruppe mit geringem Übersetzungssprung, die auch als Splitgruppe bezeichnet werden kann, werden die Übersetzungssprünge zwischen den Übersetzungsstufen des Hauptgetriebes in etwa halbiert und damit die Anzahl der insgesamt zur Verfügung stehenden Übersetzungsstufen verdoppelt. Durch eine üblicherweise zweistufige Bereichsgruppe wird die Spreizung des Gesamtgetriebes deutlich erhöht und die Anzahl der insgesamt zur Verfügung stehenden Übersetzungsstufen nochmals verdoppelt. Hieraus ergibt sich in Verbindung mit einem dreistufigen Hauptgetriebe (mit drei Vorwärtsgängen und einem Rückwärtsgang) ein 12-gängiges Gruppengetriebe (mit insgesamt zwölf Vorwärtsgängen und maximal vier Rückwärtsgängen) sowie in Verbindung mit einem vierstufigen Hauptgetriebe (mit vier Vorwärtsgängen und einem Rückwärtsgang) ein 16-gängiges Gruppengetriebe (mit insgesamt sechzehn Vorwärtsgängen und maximal vier Rückwärtsgängen).

Das Gruppengetriebe weist gegenüber einem Einzelgetriebe mit einer vergleichbaren Anzahl von Gängen sowie ähnlicher Gangabstufung und Spreizung deutlich kompaktere Abmessungen und ein geringeres Gewicht auf. Da viele Schaltungen in einem Gruppengetriebe aber den Wechsel von Übersetzungsstufen in mehreren Teilgetrieben erfordern und somit relativ kompliziert ablaufen, sind die meisten bekannten Gruppengetriebe entweder teilautomatisiert oder vollautomatisiert schaltbar ausgebildet.

Ein Überblick über automatisierte Gruppengetriebe der Anmelderin ist in der ATZ 9/2004 auf den Seiten 772 - 783 veröffentlicht. Aus der als AS-Tronic-Familie bezeichneten Baureihe automatisierter Schaltgetriebe sind die für mittelschwere Nutzfahrzeuge konzipierten Getriebe der AS-Tronic-mid-Baureihe und die für schwere Nutzfahrzeuge vorgesehenen Getriebe der AS-Tronic-Baureihe jeweils als Gruppengetriebe mit einem mehrstufigen, also mit drei oder vier Vorwärtsgängen versehenen Hauptgetriebe, einer dem Hauptgetriebe vorgeschalteten zweistufigen Splitgruppe und einer dem Hauptgetriebe nachgeordneten zweistufigen Bereichsgruppe ausgebildet.

Das Hauptgetriebe ist jeweils in Vorgelegebauweise ausgeführt sowie mit unsynchronisierten Klauenkupplungen versehen, und weist im Fall der AS-Tronic-mid-Baureihe eine einzige Vorgelegewelle auf. Bei den Getrieben der AS-Tronic-Baureihe sind aus Gründen der Gewichts- und Bauraumoptimierung zwei Vorgelegewellen vorhanden. In beiden Baureihen ist das Hauptgetriebe wahlweise in einer Direktgangausführung (i_{HG_min} = 1) oder in einer Schnellgangausführung (i_{HG_min} <1) verfügbar.

Die Splitgruppe ist jeweils als ein Vorgelegegetriebe mit zwei schaltbaren Eingangskonstanten für das Hauptgetriebe ausgebildet. Die Bereichsgruppe ist jeweils als zweistufiges Planetengetriebe mit einer schaltbaren Direktverbindung (i_{BG} = 1) und einer alternativ schaltbaren hohen Übersetzung (i_{BG} >> 1) ausgeführt.

Weitere Ausführungen von Gruppengetrieben mit jeweils einem Hauptgetriebe, einer Vorschaltgruppe und einer nachgeschalteten Bereichsgruppe sind beispielsweise aus der DE 101 43 994 A1 bekannt.

Bei den Gruppengetrieben der AS-Tronic- und AS-Tronic-mid-Baureihe sind bislang die jeweils in einem gemeinsamen Schaltpaket zusammengefassten Schaltkupplungen der Splitgruppe und der Bereichsgruppe jeweils synchronisiert ausgebildet, wogegen das Hauptgetriebe klauengeschaltet, also unsynchronisiert schaltbar ausgeführt ist. Da die betreffenden synchronisierten Schaltkupplungen aber aufgrund eines komplizierten Aufbaus teuer sind, einen relativ großen Bauraum erfordern und verschleißbedingt die Lebensdauer des gesamten Gruppengetriebes beschränken, ist für zukünftige Ausführungen derartiger Gruppengetriebe vorgesehen, neben dem Hauptgetriebe auch die Bereichsgruppe klauengeschaltet auszuführen.

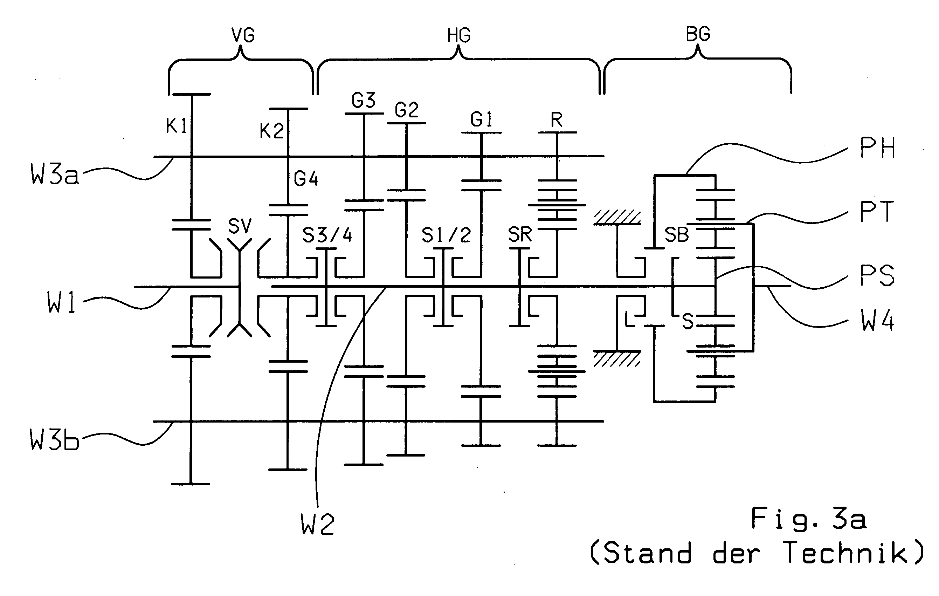

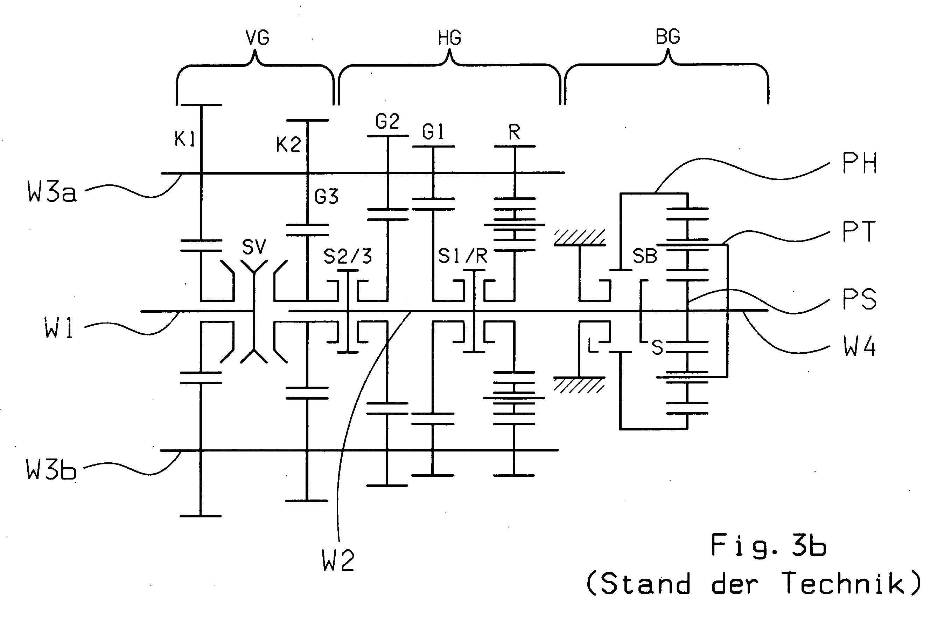

In den Fig. 3a und 3b ist beispielhaft der schematische Aufbau von zwei an sich bekannten Gruppengetrieben der AS-Tronic-Baureihe dargestellt. Das Hauptgetriebe HG ist als Direktganggetriebe in Vorgelegebauweise ausgeführt und weist eine Hauptwelle W2 und zwei Vorgelegewellen W3a, W3b auf. In der Ausführungsform gemäß Fig. 3a ist das Hauptgetriebe HG mit vier Übersetzungsstufen G1 bis G4 für die Vorwärtsfahrt und einer Übersetzungsstufe R für die Rückwärtsfahrt vierstufig ausgebildet. In der Ausführungsform gemäß Fig. 3b ist das Hauptgetriebe HG mit drei Übersetzungsstufen G1 bis G3 für die Vorwärtsfahrt und einer Übersetzungsstufe R für die Rückwärtsfahrt dreistufig ausgebildet.

Die Losräder der Übersetzungsstufen G1, G2, G3, R bzw. G1, G2, R sind jeweils drehbar auf der Hauptwelle W2 gelagert und über zugeordnete Klauenkupplungen schaltbar. Die zugeordneten Festräder sind drehfest auf den Vorgelegewellen W3a bzw. W3b angeordnet. Die jeweils als Direktgang ausgebildete höchste Übersetzungsstufe G4 bzw. G3 ist über eine Direktschaltkupplung schaltbar. Sofern möglich, sind jeweils zwei Schaltkupplungen in einem gemeinsamen Schaltpaket S1/2, S3/4 bzw. S1/R, S2/3 zusammengefasst. In der Ausführungsform nach Fig. 3a weist das Schaltpaket SR nur die Schaltkupplung der Übersetzungsstufe für Rückwärtsfahrt R auf.

Die Vorschaltgruppe VG ist zweistufig ausgebildet und ebenfalls in Vorgelegebauweise ausgeführt, wobei die beiden Übersetzungsstufen K1 und K2 zwei schaltbare Eingangskonstanten des Hauptgetriebes HG bilden. Durch eine geringe Übersetzungsdifferenz der beiden Übersetzungsstufen K1, K2 ist die Vorschaltgruppe VG als Splitgruppe ausgelegt. Das Losrad der ersten Übersetzungsstufe K1 ist drehbar auf der Eingangswelle W1 gelagert, die außerhalb der Darstellung von Fig. 3a bzw. Fig. 3b über eine steuerbare Trennkupplung mit einem als Verbrennungsmotor ausgebildeten Antriebsmotor in Verbindung steht. Das Losrad der zweiten Übersetzungsstufe K2 ist drehbar auf der Hauptwelle W2 gelagert. Die Festräder beider Übersetzungsstufen K1, K2 sind jeweils drehfest auf den eingangsseitig verlängerten Vorgelegewellen W3a, W3b angeordnet. Die synchronisiert ausgebildeten Schaltkupplungen der Vorschaltgruppe VG sind in einem gemeinsamen Schaltpaket SV zusammengefasst.

Die antriebstechnisch nachgeschaltete Bereichsgruppe BG ist ebenfalls zweistufig ausgebildet, jedoch in Planetenbauweise mit einem einfachen Planetenradsatz ausgeführt. Das Sonnenrad PS ist dabei drehfest mit der ausgangsseitig verlängerten Hauptwelle W2 verbunden. Der Planetenträger PT ist drehfest mit der Ausgangswelle W4 des Gruppengetriebes verbunden. Das Hohlrad PH steht mit einem Schaltpaket SB mit zwei Schaltkupplungen in Verbindung, mittels denen die Bereichsgruppe BG wechselweise durch die Verbindung des Hohlrades PH mit einem feststehenden Gehäuseteil in eine Langsamfahrstufe L und durch die Verbindung des Hohlrades PH mit dem Planetenträger PT in eine Schnellfahrstufe S schaltbar ist. Im Gegensatz zur bisherigen Ausführungsform der AS-Tronic-Getriebe sind die Schaltkupplungen des Schaltpakets SB vorliegend unsynchronisiert ausgebildet.

In einem derartigen Gruppengetriebe ist aufgrund der unsynchronisierten Ausführung der Bereichsgruppe BG ein spezieller Schaltablauf erforderlich, der sich deutlich von demjenigen eines weitgehend identischen, jedoch mit synchronisierter Bereichsgruppe BG versehenen Gruppengetriebes unterscheidet. Ein geeignetes Verfahren zur Schaltsteuerung eines Gruppengetriebes mit einer unsynchronisierten Bereichsgruppe BG ist beispielsweise aus der DE 101 52 857 A1 bekannt. In diesem Verfahren ist im Wesentlichen vorgesehen, dass bei einer Bereichsschaltung zunächst die Vorschaltgruppe VG und die Bereichsgruppe BG zur Unterbrechung des Kraftflusses jeweils in ihre Neutralstellung geschaltet werden, dass dann das Hauptgetriebe HG mittels einer Getriebebremse abgebremst wird, und dass eine Führung der Drehzahl des Antriebsmotors auf die Synchrondrehzahl des Zielgangs beginnt. Nach dem Schalten des Hauptgetriebes HG wird die Vorschaltgruppe VG synchronisiert in ihre Zielübersetzung geschaltet. Mit Erreichen der Synchrondrehzahl durch den Antriebsmotor wird dann die Zielübersetzung der Bereichsgruppe BG eingelegt.

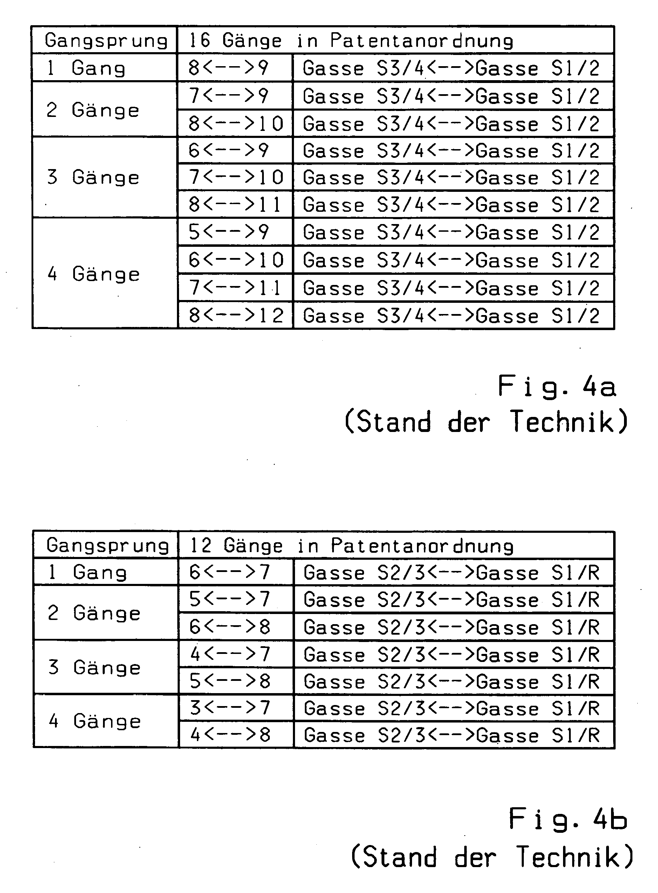

Da bei einer Bereichsschaltung das Hauptgetriebe HG entgegengesetzt zur Bereichsgruppe BG geschaltet wird, also bei einer Hochschaltung der Bereichsgruppe BG von der Langsamfahrstufe L in die Schnellfahrstufe S das Hauptgetriebe HG von einer hohen Übersetzungsstufe, z.B. G4 oder G3, in eine niedrige Übersetzungsstufe, z.B. G1 oder G2, geschaltet wird, ist in dem Hauptgetriebe HG mit der bislang üblichen Anordnung der Übersetzungsstufen in aufsteigender oder absteigender Reihenfolge jeweils ein Wechsel zwischen zwei Schaltgassen und der diesen zugeordneten Schaltpakete erforderlich. Dieser Zusammenhang ist für die Gruppengetriebe nach Fig. 3a und Fig. 3b in den Tabellen von Fig. 4a und Fig. 4b für unterschiedliche Gangsprünge zusammengefasst. Da ein automatisierter Gassenwechsel jeweils das Ansteuern und Stoppen des zugeordneten Stellantriebs sowie das Sensieren in der Neutralposition des ersten Schaltpakets, die Umschaltung zwischen den beiden Gassen bzw. Schaltpaketen und die Steuerung und Sensierung des Stellantriebs in die bzw. in der Zielschaltstellung des zweiten Schaltpakets umfasst, wirkt sich ein Gassenwechsel nachteilig verzögernd auf den gesamten Schaltungsablauf aus.

Vor diesem Hintergrund liegt der vorliegenden Erfindung die Aufgabe zugrunde, ein automatisiertes Gruppengetriebe der eingangs genannten Art anzugeben, mit dem eine Bereichsschaltung schneller als bisher durchführbar ist.

Die Lösung der Aufgabe das Gruppengetriebe betreffend ergibt sich aus den Merkmalen des Anspruchs 1. Demnach betrifft die Erfindung ein automatisiertes Gruppengetriebe, mit einem mehrstufigen Hauptgetriebe, einer dem Hauptgetriebe vorgeschalteten Splitgruppe und einer dem Hauptgetriebe nachgeschalteten zweistufigen Bereichsgruppe, wobei die Splitgruppe über eine steuerbare Trennkupplung mit einem als Verbrennungsmotor ausgebildeten Antriebsmotor in Verbindung steht, das Hauptgetriebe und die Bereichsgruppe synchronisiert oder unsynchronisiert ausgebildet sind, und in zumindest einem der Teilgetriebe die Schaltkupplungen von jeweils zwei Übersetzungsstufen jeweils in einem gemeinsamen Schaltpaket mit zwei Schaltstellungen und einer Neutralstellung zusammengefasst sind. Bei diesem Getriebe ist außerdem vorgesehen, dass in dem Hauptgetriebe die der kleinsten Übersetzungsstufe und die der größten Übersetzungsstufe zugeordneten Schaltkupplungen in einem gemeinsamen Schaltpaket zusammengefasst sind.

Hierdurch sind jeweils die kleinste Übersetzungsstufe und die größte Übersetzungsstufe schaltungstechnisch derselben Schaltgasse zugeordnet. Dies hat vorteilhaft zur Folge, dass alle Bereichsschaltungen, bei denen in dem Hauptgetriebe zwischen der kleinsten und der größten Übersetzungsstufe gewechselt wird, dort innerhalb derselben Schaltgasse durch eine einfache Umschaltung des betreffenden Schaltpakets von der einen Schaltstellung in die andere Schaltstellung erfolgen. Ein bei der bisherigen Anordnung der Zahnradsätze und der Zuordnung der Schaltpakete üblicher Wechsel zwischen zwei Schaltgassen bzw. zwei Schaltpaketen wird somit vermieden, wodurch die gesamte Schaltzeit der Bereichsschaltung und damit die zugkraftfreie Phase während der Bereichsschaltung verkürzt wird. Bei Schaltungen des Gruppengetriebes ohne eine Schaltung der Bereichsgruppe BG tritt keine zeitliche Verzögerung ein, da der Gassenwechsel während der Synchronisierung des Hauptgetriebes erfolgt.

Gemäß einer Ausgestaltung des Gruppengetriebes ist vorgesehen, dass zur Verbindung der Eingangswelle der Splitgruppe mit der Hauptwelle eine axial eingangsseitig angeordnete Direktschaltkupplung vorgesehen ist. Nach einem anderen Merkmal der Erfindung weist das Gruppengetriebe zwei parallel zueinander angeordnete Vorgelegewellen auf.

Zur Verdeutlichung der Erfindung ist der Beschreibung eine Zeichnung mit Ausführungsbeispielen beigefügt.
In diesen zeigt:
- Fig. 1a: einen schematischen Aufbau eines erfindungsgemäßen Gruppengetriebes mit einem vierstufigen Hauptgetriebe;
- Fig. 1b: den schematischen Aufbau eines erfindungsgemäßen Gruppengetriebes mit einem dreistufigen Hauptgetriebe;
- Fig. 2a: eine tabellarische Übersicht der Bereichsschaltungen des Gruppengetriebes gemäß Fig. 1a;
- Fig. 2b: eine tabellarische Übersicht der Bereichsschaltungen des Gruppengetriebes gemäß Fig. 1 b;
- Fig. 3a: den schematischen Aufbau eines bekannten Gruppengetriebes mit einem vierstufigen Hauptgetriebe;
- Fig. 3b: den schematischen Aufbau eines bekannten Gruppengetriebes mit einem dreistufigen Hauptgetriebe;
- Fig. 4a: eine tabellarische Übersicht der Bereichsschaltungen des Gruppengetriebes nach Fig. 3a und
- Fig. 4b: eine tabellarische Übersicht der Bereichsschaltungen des Gruppengetriebes nach Fig. 3b.

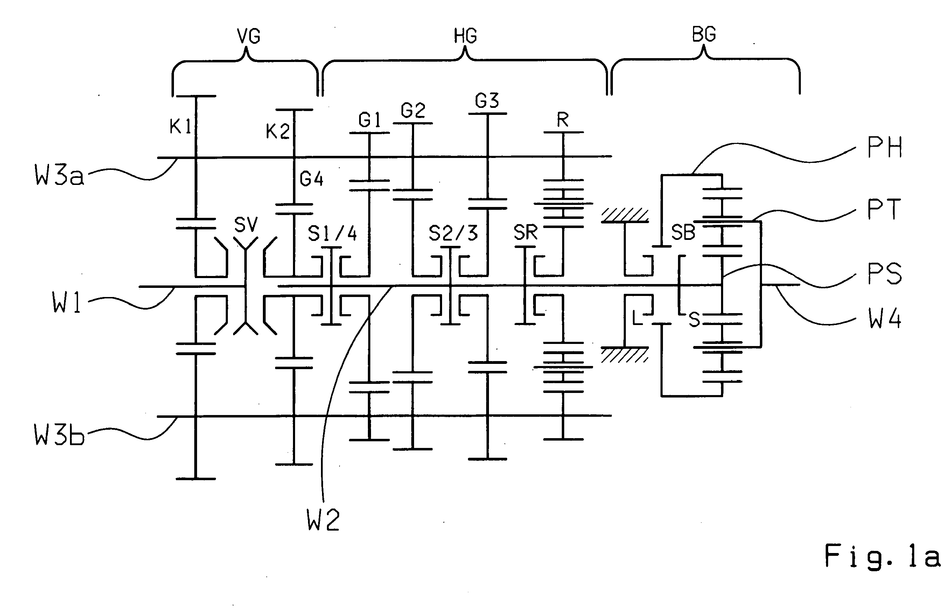

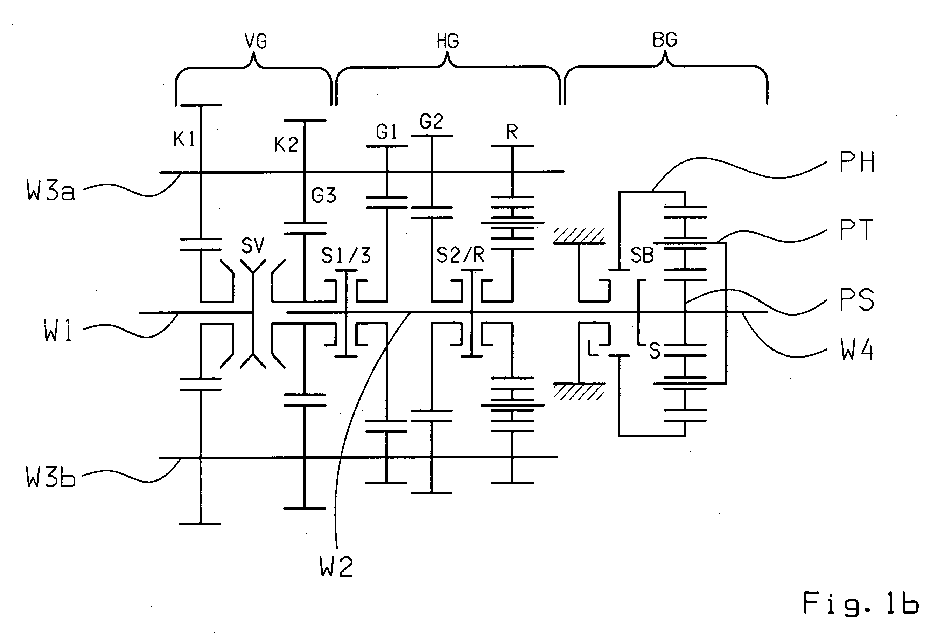

In den Fig. 1a und 1b ist beispielhaft der schematische Aufbau von zwei erfindungsgemäßen Gruppengetrieben dargestellt. Das Hauptgetriebe HG ist in Vorgelegebauweise ausgeführt und weist eine Hauptwelle W2 sowie zwei Vorgelegewellen W3a, W3b auf. In der Ausführungsform nach Fig. 1a ist das Hauptgetriebe HG mit vier Übersetzungsstufen G1 bis G4 für die Vorwärtsfahrt und einer Übersetzungsstufe R für die Rückwärtsfahrt vierstufig ausgebildet. In der Ausführungsform gemäß Fig. 1b ist das Hauptgetriebe HG mit drei Übersetzungsstufen G1 bis G3 für die Vorwärtsfahrt und einer Übersetzungsstufe R für die Rückwärtsfahrt dreistufig ausgebildet.

Die Losräder der Übersetzungsstufen G1, G2, G3 und R bzw. G1, G2 und R sind jeweils drehbar auf der Hauptwelle W2 gelagert und über zugeordnete Klauenkupplungen schaltbar. Die zugeordneten Festräder sind drehfest auf den beiden Vorgelegewellen W3a bzw. W3b angeordnet. Die jeweils als Direktgang ausgebildete höchste Übersetzungsstufe G4 bzw. G3 ist über eine Direktschaltkupplung schaltbar.

Im Unterschied zu den eingangs beschriebenen bekannten Ausführungsformen von Gruppengetrieben gemäß Fig. 3a und Fig. 3b ist in dem erfindungsgemäßen Hauptgetriebe HG der Zahnradsatz der kleinsten Übersetzungsstufe G1 nunmehr eingangsseitig neben der Direktschaltkupplung SV des Direktgangs G4 bzw. G3 angeordnet, und die Schaltkupplungen der ersten Übersetzungsstufe G1 und des Direktgangs G4 bzw. G3 sind jeweils in einem gemeinsamen Schaltpaket S1/4 bzw. S1/3 zusammengefasst. Die Schaltkupplungen der übrigen Übersetzungsstufen sind entsprechend in den Schaltpaketen S2/3, SR bzw. S2/R zusammengefasst.

Die Vorschaltgruppe VG ist zweistufig ausgebildet und ebenfalls in Vorgelegebauweise ausgebildet, wobei die beiden Übersetzungsstufen K1 und K2 zwei schaltbare Eingangskonstanten des Hauptgetriebes HG bilden. Durch eine geringe Übersetzungsdifferenz der beiden Übersetzungsstufen K1, K2 ist die Vorschaltgruppe VG als Splitgruppe ausgelegt. Das Losrad der ersten Übersetzungsstufe K1 ist drehbar auf der Eingangswelle W1 gelagert, die außerhalb der Darstellung von Fig. 1 a bzw. Fig. 1b über eine steuerbare Trennkupplung mit einem als Verbrennungsmotor ausgebildeten Antriebsmotor in Verbindung steht. Das Losrad der zweiten Übersetzungsstufe K2 ist drehbar auf der Hauptwelle W2 gelagert. Die Festräder beider Übersetzungsstufen K1 und K2 sind jeweils drehfest auf den eingangsseitig verlängerten Vorgelegewellen W3a bzw. W3b angeordnet. Die synchronisiert ausgebildeten Schaltkupplungen der Vorschaltgruppe VG sind in dem gemeinsamen Schaltpaket SV zusammengefasst.

Die antriebstechnisch dem Hauptgetriebe HG nachgeordnete Bereichsgruppe BG ist ebenfalls zweistufig ausgebildet, jedoch in Planetenbauweise mit einem einfachen Planetenradsatz ausgeführt. Die Bereichsgruppe BG kann jedoch auch in Vorgelegebauweise konstruiert sein. Das Sonnenrad PS ist dabei drehfest mit der ausgangsseitig verlängerten Hauptwelle W2 verbunden. Der Planetenträger PT ist drehfest mit der Ausgangswelle W4 des Gruppengetriebes gekoppelt. Das Hohlrad PH steht mit einem Schaltpaket SB mit zwei Schaltkupplungen in Verbindung, durch welche die Bereichsgruppe BG wechselweise durch die Verbindung des Hohlrades PH mit einem feststehenden Gehäuseteil in eine Langsamfahrstufe L und durch die Verbindung des Hohlrades PH mit der Hauptwelle W2 bzw. dem Sonnenrad PS in eine Schnellfahrstufe S schaltbar ist. Alternativ dazu ist in einer nicht dargestellten Schnellfahrstufe S auch eine Schaltverbindung des Hohlrades PH mit dem Planetenträger PT möglich. Die Schaltkupplungen des Schaltpakets SB sind Kosten sparend unsynchronisiert ausgebildet.

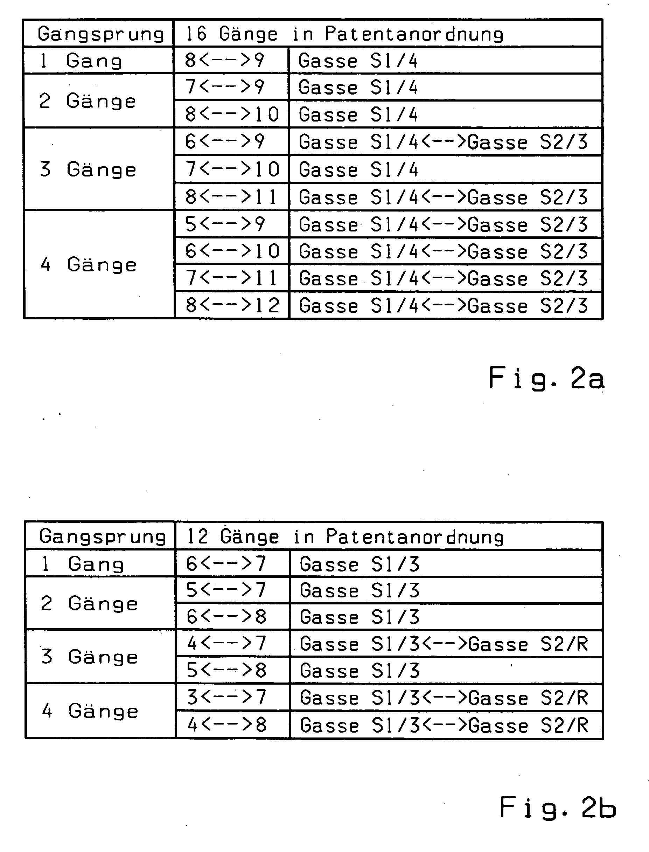

Aufgrund der erfindungsgemäßen Ausbildung der Gruppengetriebe gemäß den Figuren 1 a und 1 b, insbesondere der Anordnung der Zahnradsätze der Übersetzungsstufen G1, G2, G3, R bzw. G1, G2, R sowie der Zuordnung der Schaltpakete S1/4 bzw. S1/3 in dem Hauptgetriebe HG, sind die meisten Bereichsschaltungen nunmehr ohne einen Wechsel der Schaltgasse bzw. des Schaltpakets und somit im Vergleich zu bekannten Gruppengetrieben mit einer Standardanordnung der Übersetzungsstufen in aufsteigender oder absteigender Reihenfolge deutlich schneller durchführbar. Dieser Zusammenhang ist für die Gruppengetriebe gemäß Fig. 1a und Fig. 1b in den Tabellen von Fig. 2a und Fig. 2b für unterschiedliche Gangsprünge zusammengefasst.

### Bezugszeichen

- BG: Bereichsgruppe
- G1: (erste) Übersetzungsstufe (von HG)
- G2: (zweite) Übersetzungsstufe (von HG)
- G3: (dritte) Übersetzungsstufe (von HG)
- G4: (vierte) Übersetzungsstufe (von HG)
- HG: Hauptgetriebe
- i_{BG}: Übersetzung von BG
- i_{HG}: Übersetzung von HG
- I_{HG-min}: kleinste Übersetzung von HG
- K1: (erste) Übersetzungsstufe (von VG)
- K2: (zweite) Übersetzungsstufe (von VG)
- L: Langsamfahrstufe (von BG)
- PH: Hohlrad (von BG)
- PS: Sonnenrad (von BG)
- PT: Planetenträger (von BG)
- R: Rückwärts-Übersetzungsstufe (von HG)
- S: Schnellfahrstufe (von BG)
- SB: Schaltpaket (von BG)
- SR: Schaltpaket (von HG)
- SV: Schaltpaket (von VG), Direktschaltkupplung
- S1/2: Schaltpaket (von HG)
- S1/3: Schaltpaket (von HG)
- S1/4: Schaltpaket (von HG)
- S1/R: Schaltpaket (von HG)
- S2/3: Schaltpaket (von HG)
- S2/R: Schaltpaket (von HG)
- S3/4: Schaltpaket (von HG)
- VG: Vorschaltgruppe, Splitgruppe
- W1: Eingangswelle
- W2: Hauptwelle
- W3a: Vorgelegewelle
- W3b: Vorgelegewelle
- W4: Ausgangswelle

## Patentansprüche

1. Gruppengetriebe, mit einem mehrstufigen Hauptgetriebe (HG), das drei oder vier Vorwärtsgänge aufweist, mit einer dem Hauptgetriebe (HG) vorgeschalteten Splitgruppe (VG) und einer dem Hauptgetriebe (HG) nachgeschalteten zweistufigen Bereichsgruppe (BG), wobei die Splitgruppe (VG) über eine steuerbare Trennkupplung mit einem als Verbrennungsmotor ausgebildeten Antriebsmotor in Verbindung steht, das Hauptgetriebe (HG) und die Bereichsgruppe (BG) synchronisiert oder unsynchronisiert ausgebildet sind, und in zumindest einem der Teilgetriebe (VG, HG, BG) die Schaltkupplungen von jeweils zwei Übersetzungsstufen jeweils in einem gemeinsamen Schaltpaket mit zwei Schaltstellungen und einer Neutralstellung zusammengefasst sind, dadurch **g ekennzeichnet**, dass in dem Hauptgetriebe (HG) die der kleinsten Übersetzungsstufe (G1) und die der größten Übersetzungsstufe (G4 bzw. G3) zugeordneten Schaltkupplungen in einem gemeinsamen Schaltpaket (S1/4 bzw. S1/3) zusammengefasst sind.

2. Automatisiertes Gruppengetriebe nach Anspruch 1, **dadurch gekennzeichnet, dass** zur Verbindung der Eingangswelle (W1) der Splitgruppe (VG) mit der Hauptwelle (W2) eine axial eingangsseitig angeordnete Direktschaltkupplung (SV) vorgesehen ist.

3. Automatisiertes Gruppengetriebe nach Anspruch 1 oder 2, **dadurch gekennzeichnet, dass** dieses zwei Vorgelegewellen (W3a, W3b) aufweist.

## Claims

1. Group transmission, having a multiple-stage main transmission (HG) which has three or four forward gears, having a split group (VG) which is connected upstream of the main transmission (HG) and a two-stage range group (BG) which is connected downstream of the main transmission (HG), the split group (VG) being connected via a controllable separating clutch to a drive engine which is configured as an internal combustion engine, the main transmission (HG) and the range group (BG) being of synchronized or unsynchronized configuration and, in at least one of the component transmissions (VG, HG, BG), the shifting clutches of in each case two transmission stages being combined in each case in a common shifting package with two shifting positions and a neutral position, **characterized in that**, in the main transmission (HG), the shifting clutches which are assigned to the lowest transmission stage (G1) and the shifting clutches which are assigned to the highest transmission stage (G4 or G3) are combined in a common shifting package (S1/4 or S1/3).

2. Automated group transmission according to Claim 1, **characterized in that** a direct shift clutch (SV) which is arranged axially on the input side is provided for connecting the input shaft (W1) of the split group (VG) to the main shaft (W2).

3. Automated group transmission according to Claim 1 or 2, **characterized in that** it has two idler shafts (W3a, W3b).

## Revendications

1. Boîte de vitesses à changement de gamme de vitesses, comprenant une boîte de vitesses principale à plusieurs étages (HG) qui comporte trois ou quatre vitesses de marche avant, comprenant un doubleur de gamme (VG) monté en amont de la boîte de vitesses principale (HG) et un groupe-relais à deux étages (BG) monté en aval de la boîte de vitesses principale (HG), le doubleur de gamme (VG) étant en liaison avec un moteur d'entraînement réalisé sous forme de moteur à combustion interne au moyen d'un embrayage séparateur pouvant être commandé, la boîte de vitesses principale (HG) et le groupe-relais (BG) étant réalisés de manière synchronisée ou non synchronisée et, dans au moins l'une des boîtes de vitesses partielles (VG, HG, BG), les embrayages de changement de vitesses de deux étages de multiplication respectifs étant rassemblés respectivement en un paquet de changement de vitesses commun comprenant deux positions de changement de vitesses et une position neutre, **caractérisée en ce que**, dans la boîte de vitesses principale (HG), les embrayages de changement de vitesses associés au plus petit étage de multiplication (G1) et ceux associés au plus grand étage de multiplication (G4 ou G3) sont rassemblés en un paquet de changement de vitesses commun (S1/4 ou S1/3).

2. Boîte de vitesses à changement de gamme de vitesses automatisée selon la revendication 1, **caractérisée en ce qu'**un embrayage de changement de vitesses direct (SV) disposé axialement du côté de l'entrée est prévu pour la liaison de l'arbre d'entrée (W1) du doubleur de gamme (VG) à l'arbre principal (W2).

3. Boîte de vitesses à changement de gamme de vitesses automatisée selon la revendication 1 ou 2, **caractérisée en ce qu'**elle comporte deux arbres intermédiaires (W3a, W3b).
